# EUROPEAN PATENT SPECIFICATION

(11) **EP 0 578 822 B1**
(45) Date of publication and mention of the grant of the patent: **23.07.1997**
(21) Application number: 92907615.6
(22) Date of filing: 27.03.1992
(51) Int. Cl.: C08J 5/18, B29C 41/12, C08F 32/08, G11B 7/24, C08L 45/00, B29K 45/00

(54) **THERMOPLASTIC SATURATED NORBORNENE RESIN SHEET AND PRODUCTION THEREOF**
FOLIE AUS THERMOPLASTISCHEM GESAETTIGTEM NORBORNENHARZ UND VERFAHREN ZU IHRER HERSTELLUNG
FILM A BASE DE RESINE SATUREE THERMOPLASTIQUE DE NORBORNENE ET SA PRODUCTION

(30) Priority: 29.03.1991 JP 89250/91
(43) Date of publication of application: 19.01.1994
(73) Proprietor: NIPPON ZEON CO., LTD., Chiyoda-ku Tokyo 100 (JP)
(72) Inventor: TAKAHASHI, Nobukazu, Yokohama-shi Kanagawa 247 (JP); HANI, Tsutomu, Yokohama-shi Kanagawa 235 (JP); KOHARA, Teiji, Kawasaki-shi Kanagawa 216 (JP); NATSUUME, Tadao, Yokosuka-shi Kanagawa 239 (JP)
(74) Representative: VOSSIUS & PARTNER
(86) International application number: JP9200374
(87) International publication number: WO9217529

(56) References cited:
- EP-A- 0 226 956
- EP-A- 0 317 267
- EP-A- 0 353 766
- EP-A- 0 384 694
- EP-A- 0 436 372
- JP-A- 6 026 024
- JP-A-50 065 600
- JP-A-61 281 404
- JP-A-62 181 365
- JP-A-62 206 704
- JP-A-63 234 201
- US-A- 5 063 096
- Processing and Application of Plastic Film, Gihodo Publishing Co., pp 38-41 together with an English translation of a relevant part
- Plastic Engineering, May, 1983, pp 29-33

## Description

The present invention relates to a sheet made of a thermoplastic norbornene resin. More particularly, the present invention relates to a thermoplastic norbornene resin sheet which has desirable properties when used as an optical material, which has a small birefringence, and which is low in deterioration of optical properties, as well as to a process for production of said sheet.

A polycarbonate, a polymethyl methacrylate, etc. are each known as an optical plastic material. However, the polycarbonate has had a drawback of large birefringence and the polymethyl methacrylate has had drawbacks of high water absorption and insufficient heat resistance.

Thermoplastic saturated norbornene polymers are known to be usable in various applications for their excellency in transparency, heat resistance, moisture resistance, chemical resistance, etc. and be useful as optical plastic molding materials, particularly photodisk substrate, etc.

For producing a sheet made of an optical plastic material, there are known injection molding, hot pressing, extrusion molding and solution casting. However, the thermoplastic saturated norbornene resin sheets produced by injection molding, hot pressing or extrusion molding have had a large birefringence and, when the sheet thickness is 1 mm or less, have failed to have a birefringence of 20 nm or less in terms of maximum absolute value even when produced by precision injection molding, although they have a birefringence of 20 nm or less in terms of maximum absolute value when the sheet thickness is 1.2 mm or more. The above sheets also had a drawback of large surface roughness.

Also, solution casting is known for producing a thermoplastic saturated norbornene resin sheet [e.g. Japanese Patent Application Kokai (Laid-Open) No. 281404/1986, Japanese Patent Application Kokai (Laid-Open) No. 29191/1987, Japanese Patent Application Kokai (Laid-Open) No. 181365/1987 and Japanese Patent Application Kokai (Laid-Open) No. 206704/1987]. In the trial sheet production by the present inventors using the above process, however, sufficient drying of the sheet was impossible and the residual solvent concentration in the sheet was at least several % by weight in the lowest case and at least 10% by weight in the highest case. There was also a problem of, for example, foaming at the sheet surface when the sheet was dried at high temperatures.

EP-A-436372 relates to a thermoplastic composition comprising a thermoplastic saturated norbornene polymer with a special molecular weight distribution and a volatile content of at most 0.3% by weight, cf. claim 1 of D1. The polymer is processed by heat extrusion, i.e. by a "melt-extrusion method". This document represents state of the art in accordance with Article 54(3) EPC.

EP-A-226956 relates to a process wherein a solution of a polymer of at least one cycloolefin monomer containing a norbornene group in a solvent for said polymer is deposited and dried on a support.

In general, thermoplastic saturated norbornene resins, when containing a large amount of a residual solvent, have low heat resistance (the heat resistance is one of the desirable properties to be possessed by optical material resins). Further, when such a resin containing a large amount of a residual solvent was molded into an optical device for information recording and said device was used for a long period of time, the solvent has given, in some cases, adverse effects to the environment, for example, the formation of blisters due to poor adhesion to metal film.

The objects of the present invention reside in providing a thermoplastic saturated norbornene resin sheet which has desirable properties as an optical material, which has a small birefringence, and which is low in deterioration of optical properties, and a process for production of said sheet.

According to the present invention there are provided a thermoplastic norbornene resin sheet having a birefringence of 20 nm or less and an average roughness Ra of 0.05 µm or less, made of a thermoplastic saturated norbornene resin having a glass transition temperature of 110°C or more and a residual solvent concentration of 0.5% by weight or less, and a process for producing a thermoplastic saturated norbornene resin sheet having a birefringence of 20 nm or less and an average roughness Ra of 0.05 µm or less, which process comprises dissolving a thermoplastic saturated norbornene resin in a solvent containing, as the major component, a solvent capable of dissolving said resin in a concentration of 10% by weight or more and having a boiling point of 100°C or more, casting the resulting solution, drying the cast solution at a highest temperature of 100°C or less until the residual solvent concentration becomes 10% by weight or less, and continuing drying at a temperature of 110°C or more until the residual solvent concentration becomes 0.5% by weight or less.

The present invention discloses also a process as defined above,
which comprises drying the cast solution at a highest temperature of 50°C or less until the residual solvent concentration becomes 5% by weight or less and then drying at 110-250°C until the residual solvent concentration becomes 0.5% by weight or less.

The thermoplastic saturated norbornene resin used in the present invention is known in Japanese Patent Application Kokai (Laid-Open) No. 14882/1991, Japanese Patent Application Kokai (Laid-Open) No. 22137/1991, etc. Specific examples of the resin include so-called norbornene derivative resins such as a resin obtained by subjecting a ring-opening polymer of a norbornene type monomer to polymer modification such as maleic acid addition, cyclopentadiene addition or the like as necessary and then hydrogenating the modified polymer, a resin obtained by subjecting a norbornene type monomer to addition polymerization, a resin obtained by subjecting a norbornene type monomer and an α-olefin to addition polymerization, and the like. The polymerization or hydrogenation is not particularly restricted and may be conducted according to an ordinary process.

The norbornene type monomer is also known in the above documents, Japanese Patent Application Kokai (Laid-Open) No. 227424/1990, Japanese Patent Application Kokai (Laid-Open) No. 276842/1990, etc. The norbornene type monomer includes norbornene and its derivatives, for example, norbornene, alkyl- and/or alkylidene-substituted norbornenes (e.g. 5-methyl-2-norbornene, 5-dimethyl-2-norbornene, 5-ethyl-2-norbornene, 5-butyl-2-norbornene, 5-ethylidene-2-norbornene) and these compounds substituted with polar groups such as halogen, ester group and the like; dicyclopentadiene, 2,3-dihydrodicyclopentadiene, etc.; dimethanooctahydronaphthalene, alkyl- and/or alkylidene-substituted dimethanooctahydronaphthalenes, and these compounds substituted with polar groups such as halogen, ester group and the like (e.g. 6-methyl-1,4:5,8-dimethano-1,4,4a,5,6,7,8,8a-octahydronaphthalene, 6-ethyl-1,4:5,8-dimethano-1,4,4a,5,6,7,8,8a-octahydronaphthalene, 6-ethylidene-1,4:5,8-dimethano-1,4,4a,5,6,7,8,8a-octahydronaphthalene, 6-chloro-1,4:5,8-dimethano-1,4,4a,5,6,7,8,8a-octahydronaphthalene, 6-cyano-1,4:5,8-dimethano-1,4,4a,5,6,7,8,8a-octahydronaphthalene, 6-pyridyl-1,4:5,8-dimethano-1,4,4a,5,6,7,8,8a-octahydronaphthalene, 6-methoxycarbonyl-1,4:5,8-dimethano-1,4,4a,5,6,7,8,8a-octahydronaphthalene); and cyclopentadiene trimers and tetramers (e.g. 4,9:5,8-dimethano-3a,4,4a,5,8,8a,9,9a-octahydro-1H-benzoindene, 4,11: 5,10:6,9-trimethano-3a,4,4a,5,5a,6,9,9a,10,10a,11,11a-dodecahydro-1H-cyclopentaanthracene).

In the present invention, when the norbornene type monomer is subjected to ring-opening polymerization by a known process, other cycloolefin capable of giving rise to ring-opening polymerization may be used in combination in such an extent that the meritorious effect of the present invention is not impaired. Such a cycloolefin is exemplified by compounds having one reactive double bond, such as cyclopentene, cyclooctene, 5,6-dihydrodicyclopentadiene and the like.

The number-average molecular weight of the thermoplastic saturated norbornene resin used in the present invention has no particular restriction, but is 10,000-200,000, preferably 20,000-150,000, more preferably 25,000-120,000 for the practical application. When the number-average molecular weight is too small, the resin has inferior mechanical strengths and, when the molecular weight is too large, the resin has an inferior birefringence and low castability.

When the ring-opening polymer of norbornene type monomer is hydrogenated, the hydrogenation degree is 90% or more, preferably 95% or more, more preferably 99% or more in view of the resistance to heat deterioration, resistance to light deterioration, etc. of the hydrogenated product.

Other resins and additives such as antistatic agent, antioxidant, dye and the like may be used as necessary in the thermoplastic saturated norbornene resin used in the present invention. Further, a levelling agent may be preferably added for a smaller surface roughness. As the levelling agent, there may be used, for example, levelling agents for coating, such as a fluorine-containing nonionic surfactant, special acrylic resin type levelling agent, silicone type levelling agent and the like. Of these levelling agents, preferable are those having good compatibility with solvents. The amount of levelling agent used is ordinarily 5-50,000 ppm, preferably 10-20,000 ppm.

In casting the thermoplastic saturated norbornene resin, the resin must be dissolved in a solvent. The solvent must have a boiling point of 100°C or more, preferably 120°C or more and can preferably dissolve the resin uniformly at 25°C even in a solid content of 10% by weight. When a solvent of low boiling point is used, the vaporization of solvent from sheet surface during sheet drying is too rapid and there occurs nonuniform drying. As a result, waves of one severalth millimeter to about several millimeters in width and several to several hundred microns in height are formed and the surface of the resulting sheet becomes rough. A solvent having a boiling point of 200°C or less is preferable in view of the drying efficiency. A solvent having slight solvency for the above resin is unable to give a solution of high solid content, making casting in a required thickness difficult. Further, such a solvent tends to produce turbidity in sheet during the step of solvent evaporation and drying.

The solvent includes, for example, aromatic solvents and halogenated aromatic solvents. It includes specifically toluene, xylene, ethylbenzene, chlorobenzene, trimethylbenzene, diethylbenzene, isopropylbenzene, dichlorobenzene, etc. Of these, xylene, ethylbenzene and chlorobenzene are preferable. Cyclohexane and chloroform dissolve the thermoplastic saturated norbornene resin but have a low boiling point, and benzene has insufficient boiling point and solvency. Therefore, these solvents are not suitable for single use.

The solvent may be a single solvent or a mixed solvent. The mixed solvent may contain, besides benzene or cyclohexane, a cyclic ether (e.g. tetrahydrofuran or dioxane), a straight-chain hydrocarbon (e.g. n-hexane or n-octane) or the like as long as the mixed solvent can dissolve the above resin uniformly at 25°C in a solid content of 10% by weight or more. The mixed solvent well satisfying these requirements includes those containing an aromatic solvent having a boiling point of 100°C or more (e.g. xylene or ethylbenzene) in an amount of 50% or more.

### (Solution)

The resin concentration in solution for casting is 4-60% by weight, preferably 6-50% by weight, more preferably 8-45% by weight. When the resin concentration is too low, the solution has a low viscosity, making difficult the control of sheet thickness. When the resin concentration is too high, the solution has a high viscosity, incurring low handleability.

### (Casting)

The method for casting the resin solution has no particular restriction, and there may be used ordinary casting methods employed for optical materials such as polycarbonate and the like, for example, those described in "Plastic Films-Processing and Application" compiled by Plastic Film Research Group and published by Gihodo on July 10, 1971, pp. 38-44 and pp. 78-79 and "Reader on Plastic Films" compiled by Toshihiro Matsuda and published by K.K. Plastic Age on Dec. 10, 1966, pp. 106-108. Specifically, the resin solution is cast on a flat plate or a roll by the use of a bar coater, a T die, a T die with a bar, or the like.

### (Drying)

In the present invention, the sheet of cast solution is dried in two stages. In the first-stage drying, the sheet is dried at 100°C or below until the residual solvent concentration in the sheet becomes 10% by weight or less, preferably 5% by weight or less. The drying is conducted preferably at 50°C or above. When the drying temperature is too low, the drying does not proceed as desired. When the temperature is too high, foaming takes place.

Then, in the second-stage drying, the sheet is dried at 110°C or above, preferably at 110-250°C until the residual solvent concentration in the sheet becomes 0.5% by weight or less. The second-stage drying may be conducted continuously from the completion of the first-stage drying or after the cooling of the sheet after the first-stage drying. When the drying temperature is too low, the drying does not proceed as desired. When the temperature is too high, the resin undergoes oxidative deterioration in the presence of oxygen.

In these drying steps, it is not necessary to conduct drying while measuring the residual solvent concentration. That is, after the kind and amount of the polymer used, the kind and amount of the solvent used, etc. are checked carefully, conditions, for example, the drying time in which a residual solvent concentration of 10% by weight or less can be achieved at a given drying temperature of 100°C or less, and conditions, for example, the drying time in which a residual solvent concentration of 0.5% by weight or less can be achieved at a particular drying temperature of 110°C or more, are determined beforehand; drying can be conducted under these predetermined conditions.

The sheet of the present invention has a birefringence of 20 nm or less, preferably 10 nm or less, particularly preferably 5 nm or less in terms of maximum absolute value. The in-plane dispersion of birefringence is ± 20 nm or less, preferably ± 10 nm or less, particularly preferably ± 5 nm or less.

The heat resistance of the sheet is determined by the kind of the thermoplastic saturated norbornene resin, the kind of the solvent used and the residual solvent concentration in the sheet. The heat resistance is lower when the residual solvent concentration is higher. As the thermoplastic saturated norbornene resin constituting the sheet of the present invention, there is used the one having a glass transition temperature (Tg) of 110°C or more, preferably 120°C or more, particularly preferably 130°C or more.

The sheet of the present invention has a thickness of 2 µm to 1 mm, preferably 5 µm to 500 µm. The thickness is determined by the kind of the resin used, the concentration and amount of the resin solution to be cast, and the casting area of the solution. The thickness dispersion of the sheet of the present invention is within ± 5%, preferably within ± 2% of average thickness over the entire sheet surfaces.

The sheet of the present invention has a small surface roughness. The surface roughness is 0.05 µm or less, more preferably 0.02 µm or less in terms of Ra value which is a center line average roughness.

The present sheet further has a residual solvent concentration of 0.5% by weight or less. Therefore, even when used over a long period of time, the sheet causes no change in weight or thickness due to the evaporation of the residual solvent, gives no adverse effect caused by the oozing-out of the residual solvent, to the environment, and is low in deterioration of optical properties.

The sheet of the present invention can be used as a substrate for information recording optical devices of light reflection type, magnetic type or colorant type having a thin recording film at the surface, such as optical disk, optical card, optical floppy disk, optical tape, various memories and the like; goggles for sports produced by pressing; a plastic lens such as lens or cover of head lamp or tail lamp of automobiles, etc.; a touch electrode or a liquid crystal substrate each having a transparent electroconductive film at the surface; a phase plate for liquid optical display; a screen or a polarizing film; an anti-glare film for CRT; a transparent plate for information display, such as protective layer of polarizing plate or the like; an insulating film for electroconductive devices, etc.; a container for chemicals; a container for optical analysis; a container for drinks; a container for foods; a wrapping film; and so forth.

### [Examples]

The present invention is hereinafter described more specifically by way of Reference Examples, Examples and Comparative Examples. In Reference Examples, Examples and Comparative Examples, number-average molecular weight was measured by gel permeation chromatography using toluene as a solvent; hydrogenation degree was measured by ¹H-NMR; Tg was measured by DSC using part of a sheet as a sample; birefringence was measured by a double pass method using a wavelength of 633 nm; residual solvent concentration was measured by gas chromatography of 200°C; and thickness was measured by a thickness gauge of dial type. Light transmittance was measured using a spectrophotometer by changing a wavelength continuously in the range of 400 nm to 700 nm, and the minimum transmittance was taken as the light transmittance of a sheet tested. Ra was determined by conducting measurement at several points over a length of 1 mm, using a feeler type film pressure tester (Alpha Step 200 manufactured by TENCOR Co.)

### Reference Example 1

To 6-methyl-1,4:5,8-dimethano-1,4,4a,5,6,7,8,8a-octahydronaphthalene (hereinafter referred to as MTD) were added, as a polymerization catalyst, 10 parts of a cyclohexane solution containing 15% of triethylaluminum, 5 parts of triethylamine and 10 parts of a cyclohexane solution containing 20% of titanium tetrachloride. The mixture was subjected to ring-opening polymerization in cyclohexane. The resulting ring-opening polymer was subjected to hydrogenation using a nickel catalyst, to obtain a polymer solution. The polymer solution was coagulated in isopropyl alcohol. The coagulum was dried to obtain a powdery resin. The resin had a number-average molecular weight of 40,000, a hydrogenation degree of 99.8% or more, a Tg of 142°C and a residual solvent concentration of 0.05%.

### Reference Example 2

MTD and ethylene were subjected to addition copolymerization in toluene using, as a polymerization catalyst, dichloroethoxyoxovanadium/ethylaluminum sesquichloride, to obtain a polymer solution. The polymer solution was coagulated in isopropyl alcohol. The coagulum was dried to obtain a powdery resin. The resin had a MTD/ethylene copolymerization ratio of 48/52 (molar ratio) as measured by ¹³C-NMR, a number-average molecular weight of 45,000, a Tg of 143°C and a residual solvent concentration of 0.07%.

### Reference Example 3

To a mixed monomer of MTD and dicyclopentadiene (MTD/dicyclopentadiene = 7/3 by molar ratio) were added, as a polymerization catalyst, 10 parts of a cyclohexane solution containing 15% of triethylaluminum, 5 parts of triethylamine and 10 parts of a cyclohexane solution containing 20% of titanium tetrachloride. The mixture was subjected to ring-opening polymerization. To the reaction mixture was added a nickel catalyst, followed by hydrogenation to obtain a polymer solution. The polymer solution was subjected to direct drying at 290°C at an ultimate pressure of 0.5 Torr. The dried material was extruded into strands. The strands were cut to obtain a polymer of pellet form. From the amounts of residual monomers, the polymer was estimated to have a MTD/dicyclopentadiene copolymerization ratio of 7/3 (molar ratio). The polymer had a number-average molecular weight of 55,000, a hydrogenation degree of 99.8% or more and a Tg of 140°C. No residual solvent was detected in the polymer by gas chromatography of 200°C.

### Example 1

15 g of the resin obtained in Reference Example 1 was dissolved in 85 g of chlorobenzene to obtain a resin solution composition. This resin solution was dropped on a surface-polished glass plate and cast by a bar coater so as to have an area of about 300 mm in width and 500 mm in length. First-stage drying was conducted by placing the coated glass plate in an air-circulating oven and subjecting it to temperature elevation from 25°C to 90°C in 30 minutes. The resulting glass plate was cooled to room temperature and part of the sheet formed on the glass plate was cut off to measure its residual solvent concentration, which was 1.2% by weight. Then, second-stage drying was conducted by placing the above glass plate in an oven of 140°C for 90 minutes. The resulting glass plate was cooled to room temperature, after which a resin film was peeled off the glass plate and cut off at the periphery in a width of 10 mm to obtain a sheet. The sheet had a residual solvent concentration of 0.12% by weight.

The surfaces of the sheet were observed visually and using an optical microscope, which did not show any of foams, streaks, scars, etc. The sheet had a Tg of 139°C; an average thickness of 42 µm with the maximum dispersion of thickness being ±1 µm or less; a Ra value of 0.02 µm or less at both surfaces; a light transmittance of 90.2%; and a birefringence of 2 nm or less in terms of maximum absolute value, over the entire surfaces.

### Example 2

10 g of the resin obtained in Reference Example 2 was dissolved in 90 g of ethylbenzene. The solution was cast in the same manner as in Example 1. First-stage drying was conducted by placing the coated glass plate in an air-circulating oven and subjecting it to temperature elevation from 25°C to 80°C in 30 minutes. The resulting glass plate was cooled to room temperature and part of the sheet formed on the glass plate was cut off to measure its residual solvent concentration, which was 1.9% by weight. Then, second-stage drying was conducted by placing the above glass plate in an oven of 130°C for 90 minutes. The resulting glass plate was cooled to room temperature, after which a resin film was peeled off the glass plate and cut off at the periphery in a width of 10 mm to obtain a sheet. The sheet had a residual solvent concentration of 0.06% by weight.

The surfaces of the sheet were observed visually and using an optical microscope, which did not show any of foams, streaks, scars, etc. The sheet had a Tg of 141°C; an average thickness of 10 µm with the maximum dispersion of thickness being ±0.3 µm or less; a Ra value of 0.02 µm or less at both surfaces; a light transmittance of 90.5%; and a birefringence of 2 nm or less in terms of maximum absolute value, over the entire surfaces.

### Example 3

20 g of the resin obtained in Reference Example 3 was dissolved in 80 g of chlorobenzene to obtain a resin solution composition. The resin solution was dropped on a surface-polished SUS 306 plate and cast by a bar coater so as to have an area of about 300 mm in width and 500 mm in length. First-stage drying was conducted by placing the coated glass plate in an air-circulating oven and subjecting it to temperature elevation from 25°C to 90°C in 30 minutes. The resulting glass plate was cooled to room temperature and part of the sheet formed on the glass plate was cut off to measure its residual solvent concentration, which was 2.5% by weight. Then, second-stage drying was conducted by placing the above glass plate on a hot plate of 140°C for 90 minutes. The resulting glass plate was cooled to room temperature, after which a resin film was peeled off the SUS 306 plate and cut off at the periphery in a width of 10 mm to obtain a sheet. The sheet had a residual solvent concentration of 0.18% by weight.

The surfaces of the sheet were observed visually and using an optical microscope, which did not show any of foams, streaks, scars, etc. The sheet had a Tg of 138°C; an average thickness of 250 µm with the maximum dispersion of thickness being ±5 µm or less; a Ra value of 0.02 µm or less at both surfaces; a light transmittance of 90.4%; and a birefringence of 2 nm or less in terms of maximum absolute value, over the entire surfaces.

### Example 4

10 g of the resin obtained in Reference Example 1 was dissolved in 90 g of chlorobenzene. The solution was cast in the same manner as in Example 1. First-stage drying was conducted by placing the coated glass plate on a hot plate and subjecting it to temperature elevation from 25°C to 90°C in 60 minutes. The resulting glass plate was cooled to room temperature and part of the sheet formed on the glass plate was cut off to measure its residual solvent concentration, which was 4.2% by weight. Then, second-stage drying was conducted by placing the above glass plate on a hot plate, subjecting it to temperature elevation from 25°C to 120°C in 90 minutes and further keeping it at 140°C for 60 minutes. The resulting glass plate was cooled to room temperature, after which a resin film was peeled off the glass plate and cut off at the periphery in a width of 10 mm to obtain a sheet. The sheet had a residual solvent concentration of 0.44% by weight.

The surfaces of the sheet were observed visually and using an optical microscope, which did not show any of foams, streaks, scars, etc. The sheet had a Tg of 135°C; an average thickness of 38 µm with the maximum dispersion of thickness being ±0.5 µm or less; a Ra value of 0.02 µm or less at both surfaces; a light transmittance of 90.5%; and a birefringence of 2 nm or less in terms of maximum absolute value, over the entire surfaces.

### Example 5

15 g of the resin obtained in Reference Example 1 was dissolved in 85 g of chlorobenzene. The solution was cast in the same manner as in Example 1. First-stage drying was conducted by placing the coated glass plate on a hot plate and keeping it at 55°C for 30 minutes and at 90°C for 30 minutes. The resulting glass plate was cooled to room temperature and part of the sheet formed on the glass plate was cut off to measure its residual solvent concentration, which was 2.0% by weight. Then, second-stage drying was conducted by placing the above glass plate on a hot plate and keeping at 110°C for 30 minutes and at 140°C for 60 minutes. The resulting glass plate was cooled to room temperature, after which a resin film was peeled off the glass plate and cut off at the periphery in a width of 10 mm to obtain a sheet. The sheet had a residual solvent concentration of 0.11% by weight.

The surfaces of the sheet were observed visually and using an optical microscope, which did not show any of foams, streaks, scars, etc. The sheet had a Tg of 140°C; an average thickness of 100 µm with the maximum dispersion of thickness being ±2 µm or less; a Ra value of 0.02 µm or less at both surfaces; a light transmittance of 90.5%; and a birefringence of 2 nm or less in terms of maximum absolute value, over the entire surfaces.

### Example 6

15 g of the resin obtained in Reference Example 1 was dissolved in 85 g of a solvent consisting of 80 parts by weight of ethylbenzene and 20 parts by weight of cyclohexane. The solution was cast in the same manner as in Example 1. First-stage drying was conducted by placing the coated glass plate in an air-circulating oven and subjecting it to temperature elevation from 25°C to 90°C in 60 minutes. The resulting glass plate was cooled to room temperature and part of the sheet formed on the glass plate was cut off to measure its residual solvent concentration, which was 2.5% by weight. Then, second-stage drying was conducted by placing the above glass plate on a hot plate and keeping it at 130°C for 120 minutes. The resulting glass plate was cooled to room temperature, after which a resin film was peeled off the glass plate and cut off at the periphery in a width of 10 mm to obtain a sheet. The sheet had a residual solvent concentration of 0.35% by weight.

The surfaces of the sheet were observed visually and using an optical microscope, which did not show any of foams, streaks, scars, etc. The sheet had a Tg of 132°C; an average thickness of 20 µm with the maximum dispersion of thickness being ±0.5 µm or less; a Ra value of 0.02 µm or less at both surfaces; a light transmittance of 90.3%; and a birefringence of 2 nm or less in terms of maximum absolute value, over the entire surfaces.

### Example 7

A sheet was obtained in the same manner as in Example 6 except that there was used a solvent consisting of 90 parts by weight of ethylbenzene and 10 parts by weight of tetrahydrofuran. The sheet was dried by subjecting it to temperature elevation from 25°C to 90°C in 60 minutes in an air-circulating oven. The resulting sheet had a residual solvent concentration of 2.1% by weight. The sheet was further dried at 120°C for 120 minutes and had a residual solvent concentration of 0.35% by weight.

The surfaces of the sheet were observed visually and using an optical microscope, which did not show any of foams, streaks, scars, etc. The sheet had a Tg of 134°C; an average thickness of 30 µm with the maximum dispersion of thickness being ±0.5 µm or less; a Ra value of 0.02 µm or less at both surfaces; a light transmittance of 90.3%; and a birefringence of 2 nm or less in terms of maximum absolute value, over the entire surfaces.

### Comparative Example 1

10 g of the resin obtained in Reference Example 2 was dissolved in 90 g of toluene. The solution was cast in the same manner as in Example 1. The coated glass plate was dried by allowing it to stand for 3 days at 25°C. The resulting glass plate was cooled to room temperature, after which a resin film was peeled off the glass plate and cut off at the periphery in a width of 10 mm to obtain a sheet. Part of the sheet was cut off to measure its residual solvent concentration, which was 15.3% by weight.

The surfaces of the sheet were observed visually and using an optical microscope, which did not show any of foams, streaks, scars, etc. However, the sheet had a Tg of 100°C or less and had insufficient heat resistance for use as an optical material.

### Comparative Example 2

The sheet prepared in Comparative Example 1 was dried in an oven at 130°C for 90 minutes. The sheet was cooled to room temperature, after which a resin film was peeled off the glass plate and cut off at the periphery in a width of 10 mm. The resin film had a residual solvent concentration of 1.2% by weight.

The surfaces of the resin film were observed visually and using an optical microscope. None of streaks, scars, etc. was observed, but foams were seen. Measurements at the very narrow areas of the film having no foams gave a Tg of 116°C; an average thickness of 38 µm with the maximum dispersion of thickness being ±0.5 µm or less; a Ra value of 0.02 µm or less at the surface which had not been in contact with the glass plate; a light transmittance of 90.5%; and a birefringence of 2 nm or less in terms of maximum absolute value, over the entire surfaces. As a whole, the film had 5-6 semi-spherical blisters each of about 0.5 mm in radius per cm², formed by foaming and could not be regarded as sheet. The maximum Ra value of the resin film surface which had not been in contact with the glass plate, was at least 100 µm.

### Comparative Example 3

25 g of the resin obtained in Reference Example 1 was dissolved in 75 g of cyclohexane. The solution was cast in the same manner as in Example 1. First-stage drying was conducted by placing the coated glass plate in an air-circulating oven and keeping it at 40°C for 3 days. The resulting glass plate was cooled to room temperature and part of the sheet formed on the glass plate was cut off to measure its residual solvent concentration, which was 12.3% by weight. Then, second-stage drying was conducted by placing the glass plate on a hot plate and keeping it at 120°C for 180 minutes. The glass plate was cooled to room temperature, after which a resin film was peeled off the glass plate and cut off at the periphery in a width of 10 mm. The resin film had a residual solvent concentration of 3.5% by weight.

The surfaces of the resin film were observed visually and using an optical microscope. Foams, streaks and scars were seen and there were large waves. The resin film had a Tg of 100°C or less and insufficient heat resistance for use as an optical material. The film had an average thickness of 100 µm. As a whole, the film had 3-5 semi-spherical blisters each of about 0.3-0.5 mm in radius per cm², formed by foaming and could not be regarded as sheet. The maximum Ra value of the resin film surface which had not been in contact with the glass plate, was at least 5 µm even at the portions having no foams.

### Comparative Example 4

20 g of the resin obtained in Reference Example 1 was dissolved in 80 g of xylene. The solution was cast in the same manner as in Example 1. The coated glass plate was dried by placing it in an air-circulating oven and keeping it at 140°C for 30 minutes.

The surfaces of the resulting resin film were observed visually and using an optical microscope. Severe foaming was seen and the film had no utility as an optical material. The film had a Tg of 100°C or less.

### Comparative Example 5

15 g of the resin obtained in Reference Example 1 was dissolved in 85 g of chloroform (boiling point: 61.2°C). The solution was cast in the same manner as in Example 1. First-stage drying was conducted by placing the coated glass plate in an air-circulating oven and subjecting it to temperature elevation from 25°C to 90°C in 90 minutes. The resulting glass plate was cooled to room temperature, after which part of the sheet formed on the glass plate was cut off to measure its residual solvent concentration, which was 0.10% by weight. Then, second-stage drying was conducted by placing the glass plate on a hot plate and keeping it at 120°C for 30 minutes. The resulting glass plate was cooled to room temperature, after which a resin film was peeled off the glass plate and cut at the periphery in a width of 10 mm to obtain a sheet. The sheet had a residual solvent concentration of 0.05% by weight.

The surfaces of the sheet were observed visually and using an optical microscope. No foams were seen but there were large waves at the surfaces. The sheet had a Tg of 141°C and an average thickness of 20 µm with the maximum dispersion of thickness being ± about 4 µm. The maximum Ra value of the sheet surface which had not been in contact with the glass plate, was about 8 µm. The sheet had a birefringence of at least 300 nm.

### Comparative Example 6

The resin obtained in Reference Example 3 was melted at 280°C (resin temperature). The melt was extruded through a T die of 300 mm in width by the use of an extruder of 40 mm in screw diameter and cast on a roll of mirror surface finish heated to 110°C, to obtain a sheet.

The surfaces of the sheet were observed visually and using an optical microscope. No foam was seen but there were streaks and scars. The sheet had a Tg of 139°C and an average thickness of 200 µm with the maximum dispersion of thickness being ± about 15 µm. The maximum Ra value of the surface which had not been in contact with the roll, was about 0.08 µm. The sheet had a light transmittance of 90.1% and a birefringence of 125 nm in terms of maximum absolute value with the in-plane dispersion of birefringence being ± 100 nm in terms of maximum absolute value.

### Example 8

The sheet obtained in Example 4 was cut into a square of 10 cm x 10 cm. Nickel was vacuum-deposited on the surface side of the square which had been contact with the glass plate. The resulting nickel-deposited sheet was kept for 100 hours in a thermo-hygrostat of 90°C (temperature) and 85% (humidity). Then, the sheet was observed visually and using an optical microscope. Neither blister nor nickel corrosion was seen.

### Comparative Example 7

The sheet obtained in Comparative Example 1 was cut into a square of 10 cm x 10 cm. Nickel was vacuum-deposited on the surface side of the square which had been contact with the glass plate. The resulting nickel-deposited sheet was kept for 100 hours in a thermo-hygrostat of 90°C (temperature) and 85% (humidity). Then, the sheet was observed visually and using an optical microscope. A large number of gaps (blisters) were formed between the metal layer and the resin layer, and nickel corrosion was seen.

The sheet of the present invention has a birefringence of 20 nm or less in terms of maximum absolute value, a Tg of 110°C or more, a thickness of 5 µm to 1 mm with the thickness dispersion being ± 5% or less of average thickness at every point of the surfaces, and a residual solvent concentration of 0.5% by weight or less. Therefore, even when used over a long period of time, the sheet causes no change in weight and thickness due to the evaporation of residual solvent, gives no adverse effect caused by the oozing-out of residual solvent, to the environment, and is low in deterioration of optical properties.

The sheet according to the present invention has a birefringence of 20 nm or less in terms of maximum absolute value, a Tg of 110°C or more, a thickness dispersion of ± 5% or less of average thickness, and a residual solvent concentration of 0.5% by weight or less. Therefore, the sheet is low in deterioration of optical properties and can be used in various applications including various optical applications.

## Claims

1. A sheet made of a thermoplastic saturated norbornene resin having a glass transition temperature of 110°C or more and a residual solvent concentration of 0.5% by weight or less, said sheet having a maximum birefringence of 20 nm or less and an average roughness Ra of 0.05 µm or less.

2. A sheet according to Claim 1, wherein the thermoplastic saturated norbornene resin has a number-average molecular weight of 20,000-150,000.

3. A sheet according to Claim 1, wherein the thermoplastic saturated norbornene resin has a hydrogenation degree of at least 95%.

4. A sheet according to Claim 1, having a thickness of 2 µm to 1 mm.

5. A sheet according to Claim 1, having a birefringence of 10 nm or less in terms of maximum absolute value.

6. A process for producing a sheet having a glass transition temperature of 110°C or more, a residual solvent concentration of 0.5% by weight or less, an average roughness Ra of 0.05 µm or less and a birefringence of 20 nm or less in terms of maximum absolute value, which process comprises dissolving a thermoplastic saturated norbornene resin in a solvent having a boiling point of 100°C or more, casting the solution, drying the cast solution at a highest temperature of 100°C or less until the residual solvent concentration becomes 10% by weight or less, and then continuing drying at a temperature of 110°C or more until the residual solvent concentration becomes 0.5% by weight or less.

7. A process according to Claim 6, wherein the solvent is xylene, ethylbenzene, chlorobenzene, a mixed solvent containing at least 50% of xylene, or a mixed solvent containing at least 50% of ethylbenzene.

8. A process according to Claim 6, wherein the concentration of the thermoplastic saturated norbornene resin dissolved in the solvent is 4-60% by weight.

9. A process according to Claim 6, which comprises drying the cast solution at a highest temperature of 50°C or less until the residual solvent concentration becomes 5% by weight or less and then drying at 110-250°C until the residual solvent concentration becomes 0.5% by weight or less.

## Patentansprüche

1. Folie, hergestellt aus einem thermoplastischen gesättigten Norbornenharz mit einer Glasübergangstemperatur von 110°C oder mehr und einer restlichen Lösungsmittelkonzentration von 0,5 Gew.-% oder weniger, wobei die Folie eine maximale Doppelbrechung von 20 nm oder weniger und eine durchschnittliche Rauheit Ra von 0,05 µm oder weniger aufweist.

2. Folie nach Anspruch 1, in der das thermoplastische gesättigte Norbornenharz ein Zahlermittel des Molekulargewichts von 20000 - 150000 aufweist.

3. Folie nach Anspruch 1, in der das thermoplastische gesättigte Norbornenharz einen Hydrierungsgrad von mindestens 95 % aufweist.

4. Folie nach Anspruch 1 mit einer Dicke von 2 µm bis 1 mm.

5. Folie nach Anspruch 1 mit einer Doppelbrechung von 10 nm oder weniger, ausgedrückt als maximaler Absolutwert.

6. Verfahren zur Herstellung einer Folie mit einer Glasübergangstemperatur von 110°C oder mehr, einer restlichen Lösungsmittelkonzentration von 0,5 Gew.-% oder weniger, einer durchschnittlichen Rauheit Ra von 0,05 µm oder weniger und einer Doppelbrechung von 20 nm oder weniger, ausgedrückt als maximaler Absolutwert, wobei das Verfahren das Lösen eines thermoplastischen gesättigten Norbornenharzes in einem Lösungsmittel mit einem Siedepunkt von 100°C oder mehr, Gießen der Lösung, Trocknen der gegossenen Lösung bei einer Höchsttemperatur von 100°C oder weniger, bis die restliche Lösungsmittelkonzentration 10 Gew.-% oder weniger beträgt, und dann Fortsetzen des Trocknens bei einer Temperatur von 110°C oder mehr, bis die restliche Lösungsmittelkonzentration 0,5 Gew.-% oder weniger beträgt, umfaßt.

7. Verfahren nach Anspruch 6, wobei das Lösungsmittel Xylol, Ethylbenzol, Chlorbenzol, ein gemischtes Lösungsmittel, das mindestens 50 % Xylol enthält, oder ein gemischtes Lösungsmittel, das mindestens 50 % Ethylbenzol enthält, ist.

8. Verfahren nach Anspruch 6, wobei die Konzentration des in dem Lösungsmittel gelösten thermoplastischen gesättigten Norbornenharzes 4 - 60 Gew.-% beträgt.

9. Verfahren nach Anspruch 6, umfassend das Trocknen der gegossenen Lösung bei einer Höchsttemperatur von 50°C oder weniger, bis die restliche Lösungsmittelkonzentration 5 Gew.-% oder weniger beträgt, und dann Trocknen bei 110 - 250°C, bis die restliche Lösungsmittelkonzentration 0,5 Gew.-% oder weniger beträgt.

## Revendications

1. Feuille en résine saturée thermoplastique de norbornène dont la température de transition vitreuse est supérieure ou égale à 110 °C et dont la teneur en résidus de solvant est inférieure ou égale à 0,5 % en poids, laquelle feuille présente une biréfringence inférieure ou égale à 20 nm et une rugosité moyenne Ra inférieure ou égale à 0,05 µm.

2. Feuille conforme à la revendication 1, dans laquelle la résine saturée thermoplastique de norbornène présente une masse molaire moyenne en nombre de 20 000 à 150 000.

3. Feuille conforme à la revendication 1, dans laquelle la résine saturée thermoplastique de norbornène présente un taux d'hydrogénation d'au moins 95 %.

4. Feuille conforme à la revendication 1, dont l'épaisseur vaut de 2 µm à 1 mm.

5. Feuille conforme à la revendication 1, dont la biréfringence est inférieure ou égale à 10 nm, en valeur absolue maximale.

6. Procédé de production d'une feuille présentant une température de transition vitreuse supérieure ou égale à 110 °C, une teneur en résidus de solvant inférieure ou égale à 0,5 % en poids, une rugosité moyenne Ra inférieure ou égale à 0,05 µm et une biréfringence inférieure ou égale à 20 nm en valeur absolue maximale, lequel procédé comporte le fait de dissoudre une résine saturée thermoplastique de norbornène dans un solvant dont le point d'ébullition est supérieur ou égal à 100 °C, le fait d'étaler la solution, le fait de faire sécher la solution étalée à une température maximale inférieure ou égale à 100 °C jusqu'à ce que la teneur en résidus de solvant devienne égale ou inférieure à 10 % en poids, et le fait de poursuivre le séchage à une température supérieure ou égale à 110 °C jusqu'à ce que la teneur en résidus de solvant devienne égale ou inférieure à 0,5 % en poids.

7. Procédé conforme à la revendication 6, dans lequel le solvant est du xylène, de l'éthylbenzène ou du chlorobenzène, ou un mélange de solvants contenant au moins 50 % de xylène, ou encore un mélange de solvants contenant au moins 50 % d'éthylbenzène.

8. Procédé conforme à la revendication 6, dans lequel la concentration de résine saturée thermoplastique de norbornène dissoute dans le solvant vaut de 4 à 60 % en poids.

9. Procédé conforme à la revendication 6, qui comporte le fait de faire sécher la solution étalée à une température maximale inférieure ou égale à 50 °C jusqu'à ce que la teneur en résidus de solvant devienne égale ou inférieure à 5 % en poids, et le fait de poursuivre le séchage à une température de 110 à 250 °C jusqu'à ce que la teneur en résidus de solvant devienne égale ou inférieure à 0,5 % en poids.
